# EUROPÄISCHE PATENTSCHRIFT

(11) **EP 1 429 881 B1**
(45) Veröffentlichungstag und Bekanntmachung des Hinweises auf die Patenterteilung: **03.05.2006**
(21) Anmeldenummer: 02774399.6
(22) Anmeldetag: 21.09.2002
(51) Int. Cl.: B23C 3/00, B23C 5/10

(54) **VERFAHREN ZUM FRÄSEN VON GIESSFORMEN**
METHOD FOR MILLING CASTING MOULDS
PROCEDE DE FRAISAGE DE MOULES DE COULEE

(30) Priorität: 27.09.2001 DE 10147843; 10.09.2002 DE 10242191
(43) Veröffentlichungstag der Anmeldung: 23.06.2004
(73) Patentinhaber: ACTech GmbH, 09599 Freiberg (DE)
(72) Erfinder: HENTSCHEL, Bertram, 04687 Trebsen (DE); ALIJEW, Reso, 09599 Freiberg (DE); GANTNER, Detlev, 09599 Freiberg (DE)
(74) Vertreter: Borchard, Wolfgang
(86) Internationale Anmeldenummer: PCT/DE2002/003555
(87) Internationale Veröffentlichungsnummer: WO 2003/028931

(56) Entgegenhaltungen:
- DE-C- 19 544 573
- DE-C- 19 928 840

## Beschreibung

Die Erfindung betrifft ein Verfahren für die Herstellung von hitzebeständigen Gießformen aus bindemittelhaltigem Formsand, insbesondere die Herstellung einer Innenkontur von Gießformen für Prototypen, wobei sich speziell bei der Bearbeitung von Formen für die schnelle Herstellung von Prototypen aus Gußmaterialien häufig große Volumina und tiefe Gravuren ergeben.

Für die Herstellung von Gießformen mit tiefen Gravuren ist nach dem in der DE 195 44 573 C1 beschriebenen Stand der Technik eine Schichttechnik erforderlich, die eine Auswahl standardisierter Werkzeuge ermöglicht. Die DE 195 44 573 C1 geht von dem Gedanken aus, daß plattenförmige Rohlinge mit vorgegebener, gegebenenfalls variabler Wandstärke nacheinander mit einer Grundstruktur oder einem zuvor bearbeiteten Rohling flächig verbunden und jeweils anschließend nach Massgabe des für die betreffende Schicht abzuarbeitenden NC - Programms von ihrer nach unten weisenden Breitseite aus über Kopf mit von unten nach oben weisenden Fräswerkzeugen bearbeitet werden. Die Fertigung erfolgt daher sukzessive aus plattenförmigen Materialschichten. Da immer relativ dünne gleichartige Schichten bearbeitet werden müssen, können die Fräsdaten bei gegebenem Werkstoff optimiert werden. Insbesondere ergeben sich bei gegebener Schichtdicke und gleichem Werkstoff immer die gleichen Fräsparameter.

Nachteilig sind die Verwendung von Klebstoff und der zusätzliche Aufwand für das Zusammenfügen der Schichten, um inkrementale Fehler beim Schichtaufbau zu vermeiden. Vor oder nach einer jeder Konturenbearbeitung wird die freie Breitseitenfläche mit einem Planfräser auf ein vorgeschriebenes Abstandsmaß gebracht. Am Außenrand sind Stützzonen erforderlich, die dafür sorgen, daß der nächste Rohling exakt in der Verbindungsebene ausgerichtet und mit dem zuvor bearbeiteten Rohling verbunden werden kann.

Beim Einsatz standardisierter Fräswerkzeuge werden auf diese Weise die Vorteile der Hochgeschwindigkeitsbearbeitung zum Teil wieder aufgehoben. Standardisierte Fräswerkzeuge enthalten in der Regel einen Kugelkopf mit einem Durchmesser von 6 mm und einer Auskraglänge von höchstens 24 mm. Daraus ergibt sich ein Durchmesser - Längenverhältnis von 1 zu 4 bis höchstens 1 zu 8. Aus diesem vergleichsweise geringen Durchmesser - Längenverhältnis resultiert notwendigerweise die Bearbeitung in einzelnen Schichten.

Da sich durch die Hochgeschwindigkeitsbearbeitung beim Formenbau sehr hohe Oberflächenqualitäten erzeugen lassen, können in vielen Fällen nachfolgende Feinbearbeitungsverfahren ganz oder teilweise entfallen. Hierbei lassen sich Oberflächen herstellen, die der geforderten Endformgenauigkeit in bezug auf Maß - und Formabweichung sowie Oberflächengüte entsprechen. Insbesondere bei komplizierten Formen im Formenbau können die Hauptzeiten bei der Hochgeschwindigkeitsbearbeitung durch höhere Vorschubgeschwindigkeiten erheblich reduziert werden. Bei einem Kugelkopffräser wird die Oberflächenrauheit durch den vorgegebenen Werkzeugdurchmesser bestimmt. Ein kleiner Kantenradius kann durch einen Torusfräser erzielt werden, der jedoch wesentlich größere Abmessungen und eine höhere Masse aufgrund der Spannelemente für die Wendeschneidplatten aufweist.

Andererseits liegen bei der Hochgeschwindigkeitsbearbeitung die Schnittgeschwindigkeiten etwa um den Faktor 5 - 10 höher als im konventionellen Bereich, so daß sich daraus erhöhte Anforderungen an die verwendeten Fräswerkzeuge ergeben. Fräswerkzeuge für die Hochgeschwindigkeitsbearbeitung unterliegen hohen Fliehkraftbelastungen. Mit hohen Umfangsgeschwindigkeiten muß auch die Werkzeugunwucht berücksichtigt werden, die bei der konventionellen Bearbeitung von eher untergeordneter Bedeutung ist. Bei hohen Drehzahlen können durch Werkzeugunwuchten Kräfte erzeugt werden, die größer sind als die eigentlichen Zerspankräfte. Aus diesem Grunde ist durch die konstruktive Auslegung, insbesondere bei Wendeplattenwerkzeugen, der Einsatz bei der Hochgeschwindigkeitsbearbeitung begrenzt. Mit steigender Schnittgeschwindigkeit entstehen ansteigende Werkzeugkosten, die durch hohe Temperaturen und starken abrasiven Verschleiß verursacht werden.

In der Praxis hat sich gezeigt, daß mit den eingangs genannten standardisierten Fräswerkzeugen keine befriedigenden Ergebnisse erzielt werden können. Dies ist in erste Linie durch die bei hohen Drehfrequenzen auftretenden Belastungen der Werkzeuge durch die entstehenden Fliehkräfte bedingt. Während ausgewuchtete Vollmaterialwerkzeuge in der Regel unkritisches Verhalten zeigen, sind besonders Werkzeuge mit Wendeschneidplatten mit hohen Massen und großen Durchmessern in ihrer bisherigen Form den Fliehkräften kaum gewachsen. Vor diesem Hintergrund sind für die Hochgeschwindigkeitsbearbeitung geeignete Werkzeuge erforderlich.

In der DE 199 28 840 C1 wird zum Fräsen von Gießformen ein Schaftwerkzeug mit einem schlanken Schaft und einem flachen Schneidblatt eingesetzt. Das Schneidblatt ist ein Stanzteil aus einem flachen Zuschnitt aus Stahl, verschleißfestem Stahl oder einem geeigneten verschleißfesten Werkstoff mit einer Dicke von vorzugsweise 0,2 - 1 mm. Das Schaftwerkzeug weist in Abhängigkeit von den kleinen Abmessungen des Schaftes und der Schneidplatte einen Außendurchmesser von geringer Größe auf. Die Umfangsschneiden der Schneidplatten sind deutlich außerhalb des Schaftquerschnitts angeordnet.

Die Erfindung bezweckt ein Verfahren, mit dem die Effizienz bei der Herstellung von hitzebeständigen Gießformen aus bindemittelhaltigem Formsand, mit einer tiefen Gravur wesentlich gesteigert werden kann.

Erfindungsgemäß wird die Aufgabe durch ein Verfahren mit den Merkmalen des Anspruchs 1 gelöst. Weitere vorteilhafte Ausgestaltungen der Erfindung ergeben sich aus den Unteransprüchen.

Mit dem vorgeschlagenen Verfahren können Gießformen durch direktes Formstoff- Fräsen mit niedrigen Fertigungskosten und schnellen Fertigungszeiten hergestellt werden. Mit lang auskragenden Fräswerkzeugen ist eine Komplettbearbeitung der Gießform in einer Aufspannung möglich, was eine schnelle Fertigung von Formen, Modellen und Prototypen ohne das schichtweise Kleben ermöglicht. Die Genauigkeit der gesamten Form kann dadurch in bisher nicht bekannter Weise wesentlich erhöht werden. Die Schneidblätter der Fräswerkzeuge können darüber hinaus mit kleinen Eckradien ausgebildet werden, so daß in den Gießformen komplizierte Konturen mit höchster Genauigkeit abgebildet werden. Der Werkzeugschaft weist einen hohen Schlankheitsgrad auf. Mit diesem Merkmal des Fräswerkzeuges können auch komplizierte Konturen in kleinen tiefliegenden Formbereichen hergestellt werden, die ansonsten für herkömmliche Werkzeuge unzugänglich sind. Durch die Verwendung moderner Schneidstoffe werden höchste Schnittgeschwindigkeiten bei hohen Vorschubgeschwindigkeiten ermöglicht, die sich in einer deutlichen Verkürzung der Fertigungszeit und Verbesserung der Oberflächenqualität niederschlagen.

Die Erfindung soll nachstehend anhand eines Ausführungsbeispiels unter Bezugnahme auf die Zeichnungen näher erläutert werden. Im einzelnen zeigt
Figur 1 einen Teilschritt des Verfahrens durch Bearbeiten der Gießform mittels Schruppfräsen,
Figur 2 das Bearbeiten der Gießform mit einem Schlichtfräser,
Figur 3 einen Schlichtfräser mit kraftschlüssig befestigter Schneidplatte,
Figur 4 einen Schlichtfräser mit formschlüssig gehaltener Schneidplatte,
Figur 5 einen Schruppfräser mit kraftschlüssig befestigter Schneidplatte und
Figur 6 einen Schruppfräser mit formschlüssig gehaltener Schneidplatte, in schematischer Darstellung.

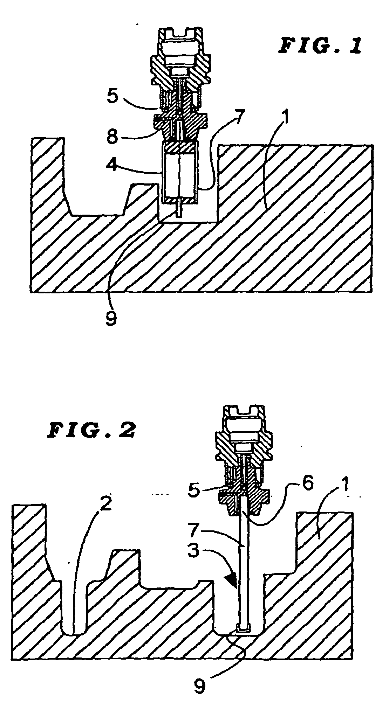

In Figur 1 ist ein Formstoffblock ersichtlich, der als Teil einer Gießform 1 mit tiefliegenden Konturen 2 bearbeitet werden soll. Die tiefliegenden Konturen 2 sind in Figur 2 ersichtlich. Unter Gießform 1 sind hitzebeständige Gießformen aus einem Formstoff, insbesondere aus bindemittelhaltigem Formsand zu verstehen. Ein weiteres Anwendungsgebiet ist etwa zum Beispiel die Herstellung von Graphitelektroden.

Die Gießform 1 besteht in der Regel aus mindestens zwei Formhälften oder aus mehreren Formteilen, die zusammen mit in der Gießereitechnik gebräuchlichen Kernen zu einer kompletten Form zusammengesetzt werden. Für die Herstellung einer Gießform 1 wird zunächst ein Formstoffblock aus einem Formstoff oder bindemittelhaltigem Formsand hergestellt, der seinen Abmessungen nach in der Regel einer Gießfonnhälfte entspricht. Die Höhe der Gießform 1 und damit die Dicke des Formstoffblockes ist im wesentlichen durch die Auskraglänge des Fräswerkzeuges bestimmt, mit dem die tiefliegenden Konturen 2 zu bearbeiten sind. Die Bearbeitung der tiefliegenden Konturen 2 erfolgt mit einem in Figur 2 dargestellten Schlichtfräser 3, der eine maximale Auskraglänge zwischen 300 bis 400 mm aufweisen soll. Auf diese Weise kann die Formhohlraumtiefe bis zu 400 mm betragen und das Zusammenfügen von einzelnen Gießformschichten durch Kleben kann vermieden werden. Das Verfahren kann jedoch nicht auf die Herstellung von Gießformhälften beschränkt werden. Vielmehr können mit Hilfe des Verfahrens einzelne Formstoffblöcke in den gegebenen Abmessungen bearbeitet und zu größeren Gießformen 1 zusammengesetzt werden.

Die Bearbeitung von Gießformen 1 untergliedert sich im allgemeinen in das Schruppen und Schlichten der Geometrie. Aufgrund der unterschiedlichen Anforderungen an die beiden Teilschritte sind spezielle Verfahrensweisen sowohl für das Schruppen als auch das Schlichten zweckmäßig.

Ziel des Schruppens ist die wirtschaftliche und damit schnelle Bearbeitung eines großen Materialvolumens, um die Form für den nachfolgenden Schlichtvorgang anzunähern. Nach Figur 1 wird mit einem Fräswerkzeug in der Form eines Schruppwerkzeugs 4 zunächst die Innenkontur der Gießform 1 mit einem Aufmaß in einem konturennahen Abstand zu der Kontur der inneren Wand des Formhohlraumes ausgearbeitet. Durch ein sorgfältiges an die Geometrie angepaßtes Schruppen mit dem Schruppwerkzeug 4 kann mit großem Vorschub und hoher Schnittgeschwindigkeit der Schlichtvorgang auf ein geringes notwendiges Maß verringert werden.

Der Antrieb der Fräswerkzeuge mit hohen Drehzahlen erfolgt mit einer Hochfrequenzspindel, die nicht weiter dargestellt ist. Die Aufnahme der Fräswerkzeuge erfolgt durch ein für die hohen Drehzahlen taugliches Spannfutter 5, das eine hohe Steifigkeit des Werkzeughalters und eine große Dämpfung des Systems aufweist. Hierfür eignen sich Spannsysteme mit Kraftschrumpftechnik oder Warmschrumpftechnik. Bevorzugt werden Spannsysteme mit einer hohen Schwingungsdämpfung, weil sich eine mangelhafte Schwingungsdämpfung negativ auf den Standweg auswirken kann.

Zum anderen sind Spannfutter 5 für den in Figur 2 dargestellten Schlichtfräser 3 zu bevorzugen, die einen schlanken Werkzeughalter aufweisen, um optimale Voraussetzungen für das Fräsen in schwer zugänglichen Gießformbereichen zu schaffen. Sehr steife Spannsysteme können für das Schruppfräsen eingesetzt werden, um hohe Spann - und Querkräfte aufzunehmen. Die Spannfunktion basiert in der Regel auf der elastischen Verformung des Werkzeughalters. Im Gegensatz dazu können desgleichen Spannzangenfutter eingesetzt werden, die jedoch im Vergleich zu der Kraftspanntechnik und der Warmschrumpftechnik mit beweglichen Teilen versehen sind. Wichtig für die Auswahl des Spannmittels sind der symmetrische Aufbau und eine optimale Wuchtgüte, als Voraussetzung für eine hohe Rundlaufgenauigkeit und die Verbesserung der Fräsergebnisse. Bei der Spannzangenaufnahme kann der endseitige Schaftbereich mit dem Spannschaft 6 des Werkzeugschaftes 7 unmittelbar in der Spannzange befestigt werden, während bei der Kraftschrumpftechnik oder bei der Warmschrumpftechnik die Anordnung eines den Werkzeugschaft 7 überragenden und zu der Werkzeugaufnahme passenden Adapterschaftes 8 nach Figur 1 vorgesehen ist.

Das Fräsen des Formstoffblockes in Figur 1 erfolgt mit einem Schruppwerkzeug 4 mit einem wirksamen Schneidendurchmesser von 12 bis zu 40 mm. Vorzugsweise soll der Schneidendurchmesser 30 bis 35 mm betragen, damit die Herstellung der Gießform 1 wirtschaftlich ist. Der Schaftdurchmesser ist auf diese Weise wesentlich größer als der Schaftdurchmesser bei einem Schlichtfräser 3. Dies ist darauf zurückzuführen, daß der Außendurchmesser des Werkzeugschaftes 7 im Zusammenhang mit der Biegebeanspruchung der Schneidplatte 9 steht, die von der freien Einspannlänge der Schneidplatte 9 abhängig ist.

Nach dem Schruppfräsen erfolgt das Schlichtfräsen des Formhohlraumes mit einem Schlichtfräser 3, der in Figur 2 dargestellt ist. Beim Schlichtfräsen erfolgt ein schnelles konturenverfolgendes Abfräsen des Aufmaßmaterials mit dem Schlichtfräser 3, der in einer der zuvor beschriebenen Spannaufnahme eingespannt und mit hohen Drehzahlen angetrieben ist.

Daneben kann das Schlichtfräsen das Fräsen von Formen mit oder ohne Formschräge sowie ein Vorschlichten und Schlichten enthalten. Für das Schlichten wird ein Schlichtfräser 3 mit einem gegenüber dem Schruppwerkzeug 4 reduzierten wirksamen Werkzeugdurchmesser und einem Durchmesser- Längenverhältnis zwischen 1 zu 10 bis 1 zu 30, vorzugsweise zwischen 1 zu 13 bis 1 zu 25 eingesetzt, der im Detail weiter unten beschrieben ist. Abschließend wird die Gießform 1 einer Nachbehandlung unterzogen, wobei die Oberfläche des Formstoffes durch Schlichte geschlossen und der Formhohlraum durch Auftragen eines Trennmittels geglättet und für den Zusammenbau und Gießvorgang vorbereitet wird.

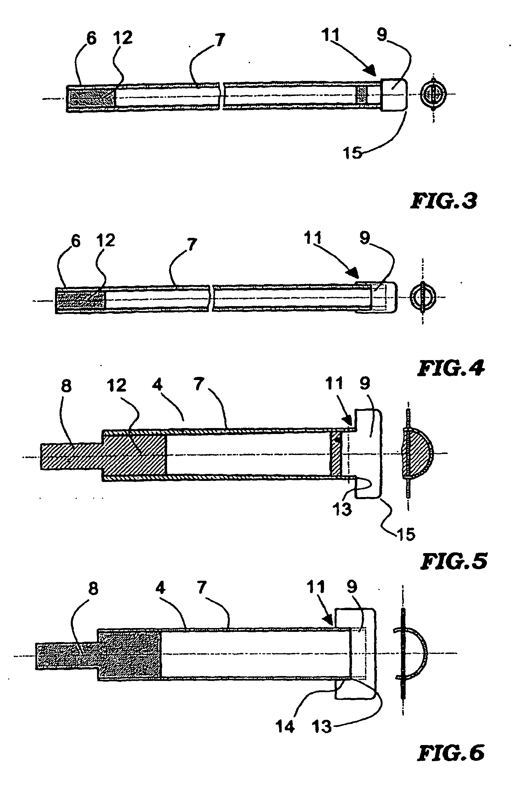

Nach Figur 3 bis 6 sind die für das Hochgeschwindigkeitsfräsen erforderlichen Fräswerkzeuge in der Form eines Schruppwerkzeugs 4 oder eines Schlichtfräsers 3 hinsichtlich ihrer gemeinsamen Merkmale durch einen dünnwandigen Hülsenkörper gekennzeichnet, der den Werkzeugschaft 7 bildet. Dieser Werkzeugschaft 7 ist ausgewuchtet und zum Vermeiden von Unwucht rotationssymmetrisch ausgebildet. Der Werkzeugschaft 7 ist stirnseitig mit einem Schneidkopf 11 mit einer oder mehreren Schneidplatten 9 oder flügelartigen Einsätzen versehen. Auf dem gegenüberliegenden endseitigen Bereich weist der Werkzeugschaft 7 auf der Außenmantelfläche einen Spannschaft 6 mit einem glatten Zylinderschaft auf, der an sich bei ausreichender Festigkeit in einer Motorspindel mit einer Spannzangenaufnahme befestigt werden kann.

Bei Einsatz der Kraftschrumpftechnik beispielsweise und zur Erhöhung der Steifigkeit wird der Spannschaft 6 zum Einspannen in die Werkzeugaufnahme im Bereich der Innenmantelfläche mit einem mittels Preßpassung eingefügten Schaftkörper 12 versehen und verstärkt. Der Spannschaft 6 kann damit in einem Spannfutter 5 direkt aufgenommen werden. Um den Durchmesser des Werkzeugschaftes 7 an die vorgegebenen Abmessungen des Spannfutters 5 anzupassen, kann ein zu der Werkzeugaufnahme einer Motorspindel passenden Adapterschaft 8 vorgesehen werden, der den Werkzeugschaft 7 mit dem Schaftkörper 12 überragt. Auf diese Weise können an ein vorgegebenes Spannfutter 5 adaptierbare Fräswerkzeuge mit einem im Außendurchmesser unterschiedlichen Werkzeugschaft 7 eingesetzt werden, der an die jeweilige Bearbeitungsaufgabe angepasst ist.

Um die mit der Vergrößerung des Schaftdurchmessers einhergehende Massezunahme zu verringern, kann die Wandstärke des Werkzeugschaftes 7 nach Figur 5 entlang seiner Rotationsachse zur Stirnseite hin verjüngend ausgebildet werden. Die Verjüngung des Werkzeugschaftes 7 ist derart ausgebildet, daß der Flugkreisdurchmesser der Schneidplatte 9 größer als der maximale Außendurchmesser des Werkzeugschaftes 7 im Bereich des Schaftkörpers 12 mit dem Adapterschaft 8 ist. Die Verjüngung der Wandstärke kann prinzipiell durch eine konisch verlaufende oder in anderer Weise abgestufte Außenmantelfläche bei einem konstanten Innendurchmesser ausgebildet werden, die einfach und genau herstellbar ist.

Eine Erhöhung der funktionalen Eigenschaften kann dagegen durch einen Werkzeugschaft 7 erzielt werden, der eine zylindrische Außenmantelfläche mit konstantem Außendurchmesser und mindestens im Bereich zwischen dem Spannschaft 6 und der Stirnseite 13 eine nichtzylindrische, konisch oder nach und nach sich erweiternde Innenmantelfläche aufweist. Hierbei ist die Hülsenerweiterung im Bereich des Spannschaftes 6 kleiner als im Bereich der Stirnseite 13 ausgebildet. Der Vorteil der vorgeschlagenen Lösung ist eine erheblich geringere Masse des Werkzeugschaftes 7 im Bereich des Schneidkopfes 11.

Der Schneidkopf 11 weist beispielsweise aus Hartmetallplatten geschnittene Schneidplatten 9 auf, die stimseitig mit dem Werkzeugschaft 7 mit einem Schlitz 14 formschlüssig oder kraftschlüssig verbunden sind. Die Schneidplatten 9 können beschichtet werden oder außerdem aus Schnellarbeitsstahl sowie aus Keramik und Cermet bestehen. Die Schneidplatten 9 können aus einem plattenförmigen Material mit einer Dicke von ca. 1 mm bis 3 mm mittels Drahterodieren geschnitten werden. Die Spannkontur der Schneidplatten 9 richtet sich nach dem Befestigungsverfahren. Durch die Ausbildung und die Anordnung der Schneidplatten 9 kann die Wirtschaftlichkeit des Verfahrens weiter positiv beeinflußt werden.

Ein Schlichtfräser 3, wie in Figur 3 dargestellt, weist eine Schneidplatte 9 mit einem Flugkreisdurchmesser von 6 mm bis 12 mm auf. Vorzugsweise beträgt der Flugkreisdurchmesser 8 mm bis 10 mm. Der Eckenradius 15 beträgt 1 mm bis zum halben Durchmesser, wodurch Gußteile auch mit einem kleinen Außenkantenradius ermöglicht werden. Die Befestigung der Schneidplatte 9 im Schneidkopf 11 erfolgt durch eine kraftschlüssige Einspannung, beispielsweise durch Schrumpfen, wobei der Montageaufwand beim Auswechseln der Schneidplatte 9 angesichts der einfachen Handhabung gering ist. Der Werkzeugschaft 7 weist ein Durchmesser- Längenverhältnis auf, das zwischen 1 zu 10 bis 1 zu 30, vorzugsweise zwischen 1 zu 13 bis 1 zu 25 liegt.

Nach Figur 4 kann die Rundlaufgenauigkeit und die Vibrationsdämpfung in der Schneidplatte 9 erhöht werden, wenn die Schneidplatte 9 teilweise in einem Schlitz 14 gelagert ist, der diametral in der Stirnseite 13 des Werkzeugschaftes 7 vorgesehen ist. In dem Schlitz 14 ist die Schneidplatte 9 formschlüssig angeordnet und stoffschlüssig fixiert, wobei sich die frei auskragende Länge verringert. Eine weitere Erhöhung der Rundlaufgenauigkeit kann durch den in Figur 5 dargestellten konischen Verlauf des Werkzeugschaftes 7 ermöglicht werden. Außer diesen geometrisch bedingten Vorteilen ergibt sich auch ein weiterer Vorteil durch eine höhere Standzeit der Schneidplatte 9.

Bei einem Schruppwerkzeug 4 nach Figur 5 wird die freie Einspannlänge der Schneidplatte 9 durch eine Werkzeugschaft 7 verringert, der geringfügig kleiner als der Flugkreisdurchmesser der Schneidplatte 9 ist. In Abhängigkeit von der Plattendicke der Schneidplatte 9 kann der Durchmesser des Werkzeugschaftes 7 4 mm bis 8 mm kleiner als der Flugkeisdurchmesser der Schneidplatte 9 ausgeführt werden. Die Abmessung des Flugkreisdurchmessers des Schneidenkörpers kann 12 mm bis 40 mm, vorzugsweise 30 mm bis 35 mm betragen. Der Werkzeugschaft 7 soll ein Durchmesser - Längenverhältnis zwischen 1 zu 3,5 bis 1 zu 11 aufweisen. Bei einer formschlüssig in einem Schlitz 14 angeordneten Schneidplatte 9 nach Figur 6 kann der Schaftdurchmesser ca. 4 mm kleiner gewählt werden.

## Patentansprüche

1. Verfahren für die Herstellung von hitzebeständigen Gießformen aus bindemittelhaltigem Formsand, **gekennzeichnet durch** folgende Schritte:
a) Herstellung von Formstoffblöcken aus bindemittelhaltigem Formsand mit einer Abmessung, die einer Formhohlraumtiefe von typischerweise bis zu 300 mm bis 400 mm entspricht;
b) Ausarbeiten der Innenkontur der Gießform mit einem Aufmass in einem konturennahen Abstand zu der Kontur der inneren Wand des Formhohlraumes mittels Schruppfräsen mit großem Vorschub mit einem mit einer Hochfrequervspindel mit hohen Drehzahlen angetriebenen Schruppwerkzeug (4), das einen als dünnwandigen Hülsenkörper ausgebildeten und ausgewuchteten rotationssymmetrischen Werkzeugschaft (7) aufweist, der stimseitig einen Schneidkopf (11) aufweist und auf dem gegenüberliegenden endseitigen Schaftbereich mit einem Spannschaft (6) versehen ist, wobei der Schneidkopf (11) mindestens eine aus Hartmetallplatten geschnittene Schneidplatte (9) aufweist, die in einem stimseitig vorhandenen Schlitz (14) im Werkzeugschaft (7) form - oder kraftschlüssig angeordnet ist, wobei der wirksame Schneidendurchmesser der Schneidplatte (9) 12 bis 40 mm, vorzugsweise 30 bis 35 mm beträgt und der Werkzeugschaft (7) ein Durchmesser-Längenverhältnis zwischen 1 zu 3,5 bis 1 zu 11 aufweist;
c) Schlichtfräsen des Formhohlraumes **durch** schnelles konturenverfolgendes Abfräsen des Aufmassmaterials mit einem Schlichtfräser (3), der **durch** die Hochfrequenzsipindel mit hohen Drehzahlen angetrieben wird und einen als dünnwandigen Hülsenkörper ausgebildeten und ausgewuchteten rotationssymmetrischen Werkzeugschaft (7) aufweist, der stimseitig einen Schneidkopf (11) und auf dem gegenüberliegenden endseitigen Schaftbereich mit einem Spannschaft (6) versehen ist, wobei der Schneidkopf (11) mindestens eine aus Hartmetallplatten geschnittene Schneidplatte (9) aufweist, die in einem stimseitig vorhandenen Schlitz (14) im Werkzeugschaft (7) form - oder kraftschlüssig angeordnet ist, wobei der wirksame Schneidendurchmesser der Schneidplatte (9) gegenüber dem Schruppwerkzeug (4) reduziert ist und der Werkzeugschaft (7) ein Durchmesser - Längenverhältnis zwischen 1 zu 10 bis 1 zu 30, vorzugsweise zwischen 1 zu 13 bis 1 zu 25 aufweist;
d) Nachbehandlung der Oberfläche des Formstoffes gegebenenfalls **durch** Schlichte und Glätten des Formhohlraumes **durch** Trennmittel.

2. Verfahren nach Anspruch 1, **dadurch gekennzeichnet, dass** der Schritt b und c in einer Aufspannung des Formstoffblocks unter Verwendung eines Schruppwerkzeugs (4) beziehungsweise eines Schlichtfräsers (3) durchgeführt wird, bei welchen der Spannschaft (6) zum Einspannen in die Werkzeugaufnahme einer Motorspindel im Bereich der Außenmantelfläche mit einem glatten Zylinderschaft als Spannschaft (6) ausgebildet und im Bereich der Innenmantelfläche mit einem mittels Presspassung eingefügten Schaftkörper (12) versehen und verstärkt ist.

3. Verfahren nach Anspruch 2, **dadurch gekennzeichnet, dass** der Schritt b unter Verwendung eines Schruppwerkzeugs (4) durchgeführt wird, wobei der Spannschaft (6) zum Einspannen in die Werkzeugaufnahme einer Motorspindel im Bereich der Außenmantelfläche mit einem glatten Zylinderschaft als Spannschaft (6) ausgebildet und im Bereich der Innenmantelfläche mit einem mittels Presspassung eingefügten Schaftkörper (12) versehen und verstärkt ist, wobei der Schaftkörper (12) mit einem den Werkzeugschaft (7) überragenden und zu der Werkzeugaufnahme einer Motorspindel passenden Adapterschaft (8) versehen ist.

4. Verfahren nach Anspruch 3, **dadurch gekennzeichnet, dass** der Schritt b unter Verwendung eines Schruppwerkzeugs (4) durchgeführt wird, bei welchem die Wandstärke des Werkzeugschaftes (7) entlang seiner Rotationsachse zur Stirnseite (13) hin verjüngend ausgebildet wird, wobei die Verjüngung des Werkzeugschaftes (7) derart ausgebildet wird, dass der Flugkreisdurchmesser des Schneidenkörpers größer als der maximale Außendurchmesser des Werkzeugschaftes (7) im Bereich des Schaftkörpers (12) mit dem Adapterschaft (8) ist.

5. Verfahren nach Anspruch 3, **dadurch gekennzeichnet, dass** der Schritt b unter Verwendung eines Schruppwerkzeugs (4) durchgeführt wird, bei welchem der Werkzeugschaft (7) eine zylindrische Außenmantelfläche mit konstantem Außendurchmesser und mindestens im Bereich zwischen dem Spannschaft (6) und der Stirnseite (13) eine nichtzylindrische, konisch oder nach und nach sich erweiternde Innenmantelfläche aufweist, wodurch die Hülsenerweiterung im Bereich des Spannschaftes (6) kleiner als im Bereich der Stirnseite (13) ausgebildet ist.

## Claims

1. Method for producing heat-resistant casting moulds from moulding sand containing a binding agent, **characterised by** the following steps:
a) Manufacture of moulding material blocks from moulding sand containing a binding agent, with a dimension which typically corresponds to a mould cavity depth of 300 mm to 400 mm;
b) Producing an inside contour of the casting mould with an machining allowance having a contour which is close to the contour of the inner surface of the mould cavity, by means of rough milling with high advance rate with a high-frequency spindle driven at high revolution speeds a roughing tool (4), which exhibits a tool shaft (7) designed as a thin-walled sleeve body and balanced so as to be rotationally symmetrical, and which exhibits on the face side a cutting head (11) and is provided on the opposite end-side shaft area with a clamping shaft (6), whereby the cutting head (11) exhibits at least one cutting plate (9) cut out of carbide metal plates, arranged by positive or non-positive fit in a face-side slot (14) provided in the tool shaft (7), whereby the effective cutting diameter of the cutting plate (9) amounts to 12 to 40 mm, for preference 30 to 35 mm, and the tool shaft (7) exhibits a diameter-length ratio of between 1 to 3.5 to 1 to 11;
c) Finish-milling of the mould cavity by rapid milling, following the contour of the machining allowance with a finish milling cutter (3), which is driven at high revolution speed by the high-frequency spindle, and exhibits a tool shaft (7) designed as a thin-walled sleeve body and balanced so as to be rotationally symmetrical, which is provided on the face side with a cutting head (11) and on the opposite end-side shaft area with a clamping shaft (6), whereby the cutting head (11) exhibits at least one cutting plate (9) cut out of carbide metal plates, arranged by positive or non-positive fit in a face-side slot (14) provided in the tool shaft (7), whereby the effective cutting diameter of the cutting plate (9) is reduced in relation to the roughing tool (4) and the tool shaft (7) exhibits a diameter-length ratio of between 1 to 10 to 1 to 30, for preference between 1 to 13 to 1 to 25;
d) Subsequent treatment of the surface of the mould material as appropriate by finishing and smoothing of the mould cavity by mould release agents.

2. Method according to Claim 1, **characterised in that** the steps b and c are carried out with the clamping of the moulding material block making use of a roughing tool (4) or a finishing cutter (3) respectively, with which the clamping shaft (6) is designed for clamping into the tool mount of a motor in the area of the outer casing surface with a smooth cylinder shaft as the clamping shaft (6) and is provided in the area of the inner casing surface with a shaft body (12) inserted by means of press fit and is reinforced.

3. Method according to Claim 2, **characterised in that** the step b is carried out using a roughing tool (4), whereby the clamping shaft (6) is formed with a smooth cylinder shaft as the clamping shaft (6) for clamping into the tool mount of a motor spindle in the area of the outer casing surface, and is provided in the area of the inner casing surface with a shaft body (12) inserted by means of press fit and is reinforced, whereby the shaft body (12) is provided with an adapter shaft (8) which projects over the tool shaft (7) and fits into the tool mount of a motor spindle.

4. Method according to Claim 3, **characterised in that** the step b is carried out using a roughing tool (4), whereby the wall thickness of the tool shaft (7) is designed so as to taper along an axis of rotation towards the face side (13), whereby the tapering of the tool shaft (7) is designed in such a way that the circular diameter of the cutting body is greater than the maximum outer diameter of the tool shaft (7) in the area of the shaft body (12) with the adapter shaft (8).

5. Method according to Claim 3, **characterised in that** the step b is carried out using a roughing tool (4), whereby the tool shaft (7) exhibits a cylindrical outer casing surface with constant outer diameter and, at least in the area between the clamping shaft (6) and the face side (13), a non-cylindrical, conical, or gradually widening inner casing surface, whereby the sleeve widening in the area of the clamping shaft (6) is designed to be smaller than in the area of the face side (13).

## Revendications

1. Procédé de fabrication de moules en sable de moulage contenant un liant, et résistant à la chaleur, **caractérisé par** les opérations suivantes:
a) fabrication de blocs de matière de moulage à partir de sable de moulage contenant un liant ayant une dimension correspondant à une profondeur d'empreinte allant typiquement jusqu'à 300 mm à 400 mm;
b) usinage du contour intérieur du moule avec une surépaisseur à une distance proche du contour par rapport au contour de la paroi intérieure de l'empreinte à l'aide d'une fraise dégrossisseuse avec une avance importante avec un outil de dégrossissage (4) entraîné par une broche à haute fréquence à vitesse de rotation élevée présentant une tige d'outil (7) formée en tant qu'enveloppe à paroi fine et équilibrée à rotation symétrique présentant à la partie frontale une tête coupante (11) et pourvue dans la zone de tige d'extrémité opposée d'une tige de serrage (6); la tête coupante (11) présentant au moins une plaque de coupe (9) coupée à partir de plaques de métal dur disposée dans une fente existant à la partie frontale (14) dans la tige d'outil (7) de façon crabotée ou par adhérence; le diamètre de coupe efficace de la plaque de coupe (9) étant de 12 à 40 mm, de préférence 30 à 35 mm et la tige d'outil (7) présentant un rapport diamètre-longueur entre 1 à 3,5 jusqu'à 1 à 11;
c) fraisage de finition de l'empreinte par fraisage rapide suivant les contours du matériau de surépaisseur avec une fraise finisseuse (3) entraînée par la broche à haute fréquence à vitesses de rotation élevées présentant une tige d'outil (7) formée en tant qu'enveloppe à paroi fine et équilibrée à rotation symétrique pourvue à la partie frontale d'une tête coupante (11) et dans la zone de tige d'extrémité opposée d'une tige de serrage (6); la tête coupante (11) présentant au moins une plaque de coupe (9) coupée à partir de plaques de métal dur disposée dans une fente existant à la partie frontale (14) dans la tige d'outil (7) de façon crabotée ou par adhérence; le diamètre de coupe efficace de la plaque de coupe (9) étant réduit par rapport à l'outil de dégrossissage (4) et la tige d'outil (4) présentant un rapport diamètre-longueur entre 1 à 10 jusqu'à 1 à 30; de préférence de 1 à 13 jusqu'à 1 à 25;
d) Traitement ultérieur de la surface du matériau de moule éventuellement par un enduit et lissage de l'empreinte par un agent de séparation

2. Procédé selon la revendication 1 **caractérisé en ce que** les opérations b et c sont exécutées dans un dispositif de serrage du bloc de matière de moulage par utilisation d'un outil dégrossisseur (4) voire d'une fraise finisseuse (3) pour lesquels la tige de serrage (6) pour serrer dans le logement d'outil d'une broche de moteur dans la zone de la surface extérieure de la gaine avec une tige de cylindre lisse est formée comme tige de serrage (6) et pourvue et renforcée dans ia zone de ia surface intérieure de gaine d'un corps de tige (12) insérée à l'aide d'un dispositif d'ajustement.

3. Procédé selon la revendication 2 **caractérisé en ce que** l'opération b est exécutée en utilisant un outil dégrossisseur (4); la tige de serrage (6) pour serrer dans le logement d'outil d'une broche de moteur dans la zone de la surface extérieure de la gaine avec une tige de cylindre lisse étant formée comme tige de serrage (6) et pourvue et renforcée dans la zone de la surface intérieure de gaine d'un corps de tige (12) insérée à l'aide d'un dispositif d'ajustement sans jeu où le corps de tige (12) est pourvu d'une tige d'adaptation (8) sortant de la tige d'outil (7) et adaptée au logement d'outil d'une broche de moteur.

4. Procédé selon la revendication 3 **caractérisé en ce que** l'opération b est exécutée en utilisant un outil dégrossisseur (3) pour lequel l'épaisseur de paroi de la tige d'outil (7) est formée de façon conique le long de son axe de rotation vers la partie frontale, la conicité de la tige d'outil est formée de façon que le diamètre de rotation du corps coupant soit supérieur au diamètre extérieur maximum de la tige d'outil (7) dans la zone du corps de tige (12) avec la tige d'adaptation (8).

5. Procédé selon la revendication 3 **caractérisé en ce que** l'opération b est exécutée en utilisant un outil dégrossisseur (4) pour lequel la tige d'outil (7) présente une surface de gaine extérieure cylindrique avec un diamètre extérieur constant et au moins dans la zone entre la tige de serrage (6) et la partie frontale (13) une surface de gaine intérieure non cylindrique, conique ou s'élargissant progressivement, l'élargissement de la douille dans la zone de la tige de serrage (6) étant plus petit que dans la zone de la partie frontale (13).
